# EUROPEAN PATENT APPLICATION

(11) **EP 1 418 334 A2**
(43) Date of publication of application: **12.05.2004**
(21) Application number: 03380242.2
(22) Date of filing: 23.10.2003
(51) Int. Cl.: F02M 35/10, F02B 29/00

(54) **A vacuum compensator for explosion engines**

(30) Priority: 05.11.2002 ES 200202534
(71) Applicant: Torralba Gimeno, Cesar, 50011 Zaragoza (ES)
(72) Inventor: Torralba Gimeno, Cesar, 50011 Zaragoza (ES)
(74) Representative: Ungria Lopez, Javier

(57) **Abstract**

A vacuum compensator for explosion engines which is used to be assembled in automobile engines and assembled in the suction opening for the intake of air from outside the air filter container, has a generally hollow cylindrical shape and has one of its bases open. The compensator (1) comprises a tube-shaped body (2) which in relation to one of its bases has a series of circular sectors (3) made of a flexible material, sectors directed from their perimeter towards the center and slightly slanted towards the inside, defining a center hole (4) and the circular sectors (3) being comprised of a pair of sheets, an inside sheet (5) and an outside sheet (6), in such a way that the respective inside sheet (5) ends in a section (7) towards the inside, the sheet (5) having in a center position and in relation to its origin a circular hole (9) .

## Description

As expressed in the title of the present specification, the following invention refers to a vacuum compensator for explosion engines, which is useful to compensate for the vacuum cutoffs caused in intake manifolds of explosion engines, vacuum cutoffs that are produced by extreme accelerations of the rotation rates thereof, which produces "peaks" of fuel consumption due to defects of the chemical contact between the fuel and the combustive agent.

The vacuum compensator, installed like a seal of the suction opening of the box containing the air filter of explosion engines, achieves when there is a sudden acceleration, that the time in which a temporary reduction of the depression available in the intake manifold is produced, is reduced without their being an increased production of CO.

As a result thereof, the big advantage that is obtained is that the installation of the vacuum compensator in explosion engines, reduces fuel consumption with the subsequent savings represented thereby.

### FIELD OF APPLICATION

The vacuum compensator that is described in the present specification is useful to be installed in explosion engines, being especially applicable in automobiles as a seal of the suction opening of the box containing the air filter.

### BACKGROUND OF THE INVENTION

The vacuum compensator is intended so that it operates when the explosion engine is in a state of low energy efficient combustion, in such a way that said state is produced when the engine requires a greater delivery or supply of energy, in other words, when the accelerator that opens the butterfly valve of the intake manifold is pressed, in such a way that a temporary reduction of the depression available in the intake manifold in any engine to a larger or smaller degree, is normally observed.

The measurement of the drop of depression available in the intake manifold of the corresponding explosion engine is obtained easily by connecting any "vacuum inlet pipe" of the intake manifold to a barometer or vacuum gage, observing if the pressure exerted upon the accelerator is rapid enough, the effect contrary to the desired one is produced, since in these first instants of sudden acceleration and immediately after having pressed the accelerator, a reduction of rotation speed of the engine is observed, which is normally described as "the engine is flooded."

In short, what happens in explosion engines is that vacuum cutoffs are produced when extreme accelerations of the rotation rate are made in the intake manifolds thereof, which causes fuel consumption "peaks" due to defects of the chemical contact between the fuel and the combustive agent, that is to say, an unnecessary fuel consumption is produced, since the propulsion of the vehicle is not being taken advantage of.

Starting with the described problem, the aim to be achieved is that the time in which the vacuum cutoff is produced in the intake manifolds of explosion engines when there are sudden accelerations in the rotation rates thereof is reduced, in order to reduce or eliminate fuel consumption "peaks" and with this a savings.

On the other hand, the owner of the present application owns Patent of Invention no. 9602225 which describes a: "vacuum compensator for explosion engines", in such a way that the vacuum compensator assembled in the suction opening for the intake of air from the outside the box containing the air filter has a generally hollow cylindrical shape, having one of its bases open and having in its other base a body made out of flexible material integral to the side surface of the hollow cylindrical body, provided with a circular center opening with a variable diameter and a series of radial cuts that define some identical circular sectors.

Likewise, the owner of the present application and of Patent of Invention no. 9602225 is also owner of Certificates of Addition P9901986 and P 200101973 proceeding from the cited main patent, wherein some improvements thereof are described.

### DESCRIPTION OF THE INVENTION

The present specification describes a vacuum compensator for explosion engines, which is especially useful for its assembly in automobile engines. The vacuum compensator is assembled in the suction opening for the intake of air from outside the box containing the air filter, in such a way that the body of the compensator has in connection with one of its bases a series of circular sectors made of a flexible material, directed from their perimeter towards the center and slanted towards the inside, defining a center opening. The series of circular sectors end in a section slanted markedly towards the inside, each one of the circular sectors being comprised of two sheets, an inside one, an extension of the side surface of the hollow cylindrical body, and another outside one, connected thereto by ultrasound close to the origin of the most markedly slanted section. The inside sheet forming the series of circular sectors in a center position and in relation to its origin has a circular hole.

On the other hand, the outside sheet, forming the circular sectors extends from the origin of the inside sheet, with respect to the perimeter of the tube-shaped body, until the origin of the most markedly slanted section, in such a way that the outside sheet closes the circular hole of the inside sheet in its inoperative position.

In order to complete the description that is going to be made hereinafter and to provide a better understanding of the characteristics of the invention, the present specification is accompanied by a set of drawings, in whose figures the most characteristic details of the invention are represented in an illustrative and non-restrictive manner.

### BRIEF DESCRIPTION OF THE DRAWINGS

Figure 1 shows a perspective view of the vacuum compensator defined by a hollow cylindrical body provided with an open base, and in the other base, it has a series of circular sectors made of a flexible material, said circular sectors being arranged from their perimeter towards the center, defining a circular hole.
Figure 2 shows a view, according to a diametric section of the vacuum compensator of the preceding figure in its inoperative position (low energy efficient combustion), showing how the series of circular sectors are defined by two overlapped sheets.
Figure 3 shows a sectional detailed view of a circular sector in its position of maximum energy efficient combustion, showing how the inside sheet has slightly rotated, the outside sheet separating from it, showing the hole of the inside sheet materialized in relation to the origin thereof.

### DESCRIPTION OF A PREFERRED EMBODIMENT

In view of the commented figures and in accordance with the numbering used, we can see how the vacuum compensator (1) for explosion engines comprises a tube-shaped body (2) open at one of its bases, whereas close to its other base it has a series of circular sectors (3) made of a flexible material, said circular sectors (3) being arranged from their perimeter towards the center defining a center hole (4).

The circular sectors (3), arranged in a position slanted slightly towards the inside, are defined by a pair of sheets (5) and (6), the inside sheets (5) being integral, perimetrically, to the tube-shaped body (2) with respect to one of its bases, whereas the outside sheets (6) are connected, pointwise, to the respective inside sheet (5).

The inside sheets (5), in the form of a circular sector, end, with respect to their free end, in a section (7) slanted, also towards the inside, more markedly and its pointwise connection (8) to the outside sheet (6) is close to the origin of the section most markedly slanted, the fastening being done by ultrasound.

Besides, the inside sheets (5) have a circular hole (9) in a position central to the origin thereof with respect to the perimeter of the tube-shaped body (2).

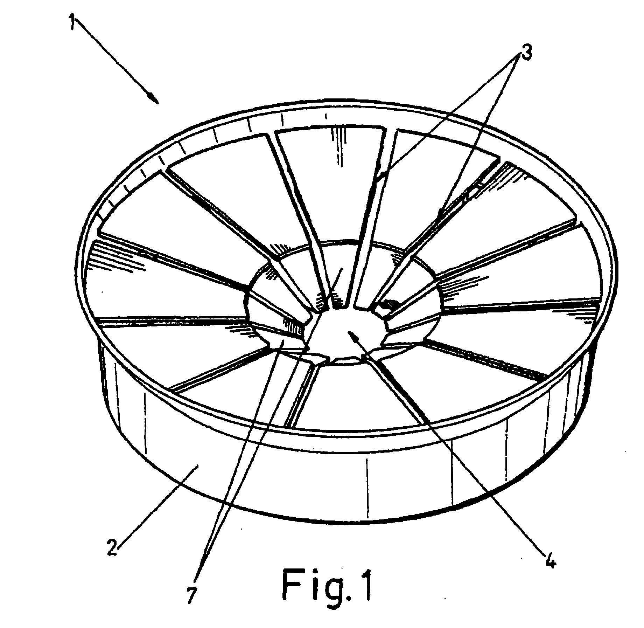

With this structure the circular sectors (3) are in continuous movement, opening and closing between two end positions, namely, from their inoperative position (figure 1) in a state of low energy efficient combustion and a state of maximum energy efficient combustion, wherein the circular sectors (3) made of flexible material are rotated, namely, open, to the maximum as the maximum intake of air is produced.

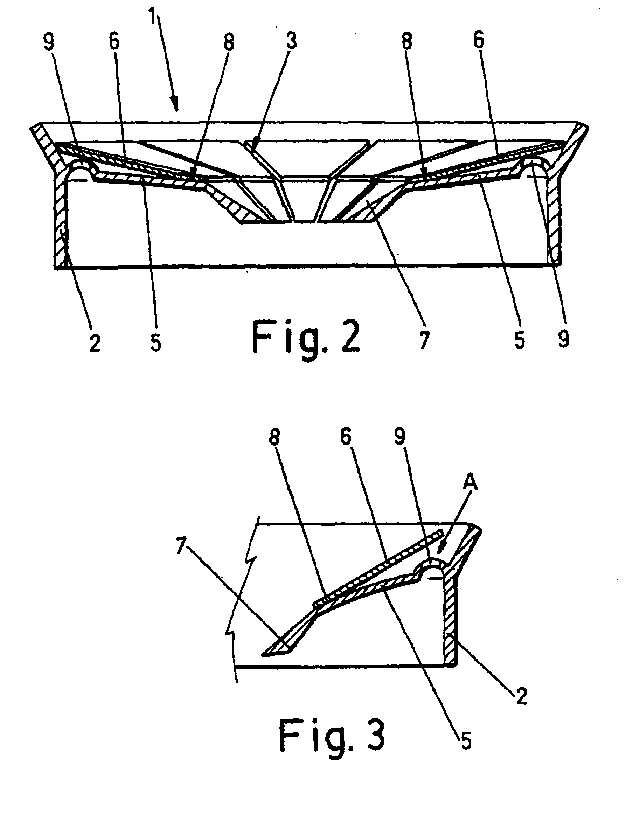

Just as it can be seen in figure 2 of the drawings, in the state of low energy efficient combustion the sheets (5) and (6) forming the circular sectors (3) are in abutment, in such a way that the outside sheet (6) seals the hole (9) of the inside sheet (5), materialized in relation to its origin.

On the other hand, the rotation of the circular sectors (3) causes the outside sheet (6), with respect to the area relative to the perimeter of the tube-shaped body (2), to separate from the inside sheet (5), namely, with respect to the hole (9) thereof.

In this way, when the maximum intake of air is produced the pressure exerted on the circular sectors (3) that causes rotation thereof towards the inside of the tube-shaped body (2) is partly compensated by the intake of air (according to arrow A of figure 3) that is produced through the holes (9) of the inside sheets (5) of the different circular sectors (3), upon actuating on the inside surface of the circular sectors (3) in the direction opposite the front air intake.

## Claims

1. A vacuum compensator for explosion engines, which is especially useful for its assembly in automobile engines, the vacuum compensator being assembled in the suction opening for the intake of air from outside the box containing the air filter, having a generally hollow cylindrical shape, and having one of its bases open, **characterized in that** the compensator (1) comprises a tube-shaped body (2) which in relation to one of its bases has a series of circular sectors (3) made of a flexible material, directed from their perimeter towards the center and slanted, slightly, towards the inside, defining a center hole (4), the series of circular sectors (3) being comprised by a pair of sheets, an inside sheet (5) and an outside sheet (6), in such a way that the respective inside sheet (5), extension of the side surface of the tube-shaped body (2) ends in a section (7) markedly slanted towards the inside, the outside sheet (6) being connected to the inside sheet (5) close to the origin of the section (7), the inside sheet (5) forming the series of circular sectors (3) having in a center position and in relation to its origin a circular hole (9).

2. A vacuum compensator for explosion engines, according to claim 1, **characterized in that** the outside sheet (6) forming the circular sectors (3) extends from the origin of the inside sheet (5), with respect to the perimeter of the tube-shaped body (2) until the origin of the most markedly slanted section (7).
